# EUROPEAN PATENT SPECIFICATION

(11) **EP 3 890 976 B1**
(45) Date of publication and mention of the grant of the patent: **29.01.2025**
(21) Application number: 19816860.1
(22) Date of filing: 03.12.2019
(51) Int. Cl.: B33Y 30/00, B29C 64/153, B29C 64/241, B29C 64/255, B29C 64/307, B29C 64/343, B33Y 40/10, B22F 10/34, B22F 12/57, B22F 10/85, B33Y 50/02, B33Y 10/00, B22F 12/90, B22F 10/28

(54) **POWDER DOSING SYSTEM**
PULVERDOSIERSYSTEM
SYSTÈME DE DOSAGE DE POUDRE

(30) Priority: 03.12.2018 GB 201819681
(43) Date of publication of application: 13.10.2021
(73) Proprietor: Stratasys Powder Production Ltd, London SW1H 0BL (GB)
(72) Inventor: TJELLESEN, Frederik, London SW1H 0BL (GB); HARTMANN, Anders, London SW1H 0BL (GB)
(74) Representative: Pitchford, James Edward
(86) International application number: PCT/GB2019/053413
(87) International publication number: WO 2020/115468

(56) References cited:
- WO-A1-2017/005301
- WO-A1-2017/005301
- WO-A1-2017/005301
- WO-A1-2017/184166
- WO-A1-2017/184166
- WO-A1-2017/196326
- WO-A1-2017/196326
- WO-A1-2017/196326
- GB-A- 2 568 521
- GB-A- 2 568 521
- GB-A- 2 568 521

## Description

The present invention relates to a dosing system for particulate matter for an apparatus for the layer-by-layer formation of three-dimensional (3D) objects, and to the operation of such a dosing system within the apparatus. The dosing system may be particularly suitable for powder bed applications that require reliable control of the amount and consistency of powder within the dosing system.

### BACKGROUND

Applications used to make 3D objects from particulate matter, such as laser sintering or high speed sintering, are receiving increased interest as they are moving towards faster throughput times and become industrially viable. In these processes, the object is formed layer-by-layer from successive layers of particulate matter that are spread across a work surface. The work surface comprises a build bed surface. Each layer of particulate matter is fused, or sintered, over defined regions of the build bed surface to form a 'slice' of the 3D object. Ensuring a reliable uniformity of the spread layers plays an important role in determining the quality of the finished object. For example, there should be no gaps or variations in density in the particulate layer that affect the integrity or vary the properties of the 'slice' that is being formed. It is therefore necessary to control the density and thickness of the powder layer that is being spread, and ensure that the amount of powder provided for the layer is sufficient to cover the entire build bed surface.

One property that defines the density of the layer of particulate matter is its 'flowability'. Particulate matter such as polymer powder may easily compact if not handled appropriately. This can be a challenge in a powder handling system that is, for example, required to fit into a compact space of a 3D printer, or that requires holding an amount of powder that selfcompacts due to its own weight.

The powder in a 3D printer may also be compacted by active devices, such as by being pushed along by an auger screw, or it may settle by simply being allowed to accumulate in areas of the delivery system that form a 'dead space' not under the influence of any forces moving the powder along or keeping it flowable.

One approach to keep a powder flowable is to agitate it, for example by applying a stirring device such as a rotational mechanical device. Another approach may be to force a flow of gas through the powder.

More particularly, it is important to prevent the powder from forming clumps before it is dosed to the work surface. In some 3D apparatus, powder may be dosed from below the work surface to the top of the work surface by a powder dosing system comprising a rotational dosing blade axially mounted to the work surface. Powder supplied to a chamber beneath the blade can be swept up onto the work surface by rotating the blade. For this type of delivery design, powder compaction may occur by overfilling a holding chamber, such as the dosing chamber from which the dosing blade doses powder to the work surface, or by simply building up enough powder height in the dosing chamber so that the weight of the powder pile compacts the lower areas of the pile. Furthermore, powder may `settle' over time the longer it is left non-agitated, for example while the printer is not in use. This can lead to clumps of material being dosed to the work surface which leads to a non uniform layer.

Background art is provided in WO 2017/005301 A1 and WO 2017/196326 A1.

WO 2017/005301 A1 discloses a method of delivering build material from a build material store to a supply module in a 3D printing system. The method comprises moving, using a rotatable vane, a portion of build material from the supply module to the top of the supply module, and spreading the moved portion of build material across the support platform.

WO 2017/196326 A1 discloses an article for distributing powder in a 3D printer, the article including a plate having holes therein through which a powder may pass from a first side of the plate to a second side of the plate opposite the first side, and multiple ramps each intersecting the plate at one or multiple holes and sloping away from the first side of the plate in a first direction at an angle less than 90°.

### SUMMARY

Aspects of the invention are set out in the appended independent claims, while particular embodiments of the invention are set out in the appended dependent claims.

### BRIEF DESCRIPTION OF THE DRAWINGS

Reference is now directed to the drawings, in which:
Figure 1 is a schematic cross-sectional view of an apparatus for layer-by-layer formation of solid objects having a powder dosing system;
Figure 2A is a schematic cross-sectional view of a powder dosing system according to a first embodiment, having an overlap, in a vertical sense, between a swept volume and an agitation volume;
Figure 2B is a schematic view of section A-A' of the powder dosing system of Figure 2A;
Figure 2C is a different view of Figure 2B with the dosing blade in a vertical position;
Figure 2D is a different view of Figure 2B with the agitator in a vertical position;
Figure 3 is a view of Figure 2A showing the powder chamber filled with powder;
Figure 4 is a schematic cross-sectional view of a comparative example of a dosing chamber system having no overlap, in a vertical sense, between the swept volume and the agitation volume;
Figure 5A is a view of Figure 3 indicating the powder volume along the swept volume;
Figure 5B is a view of Figure 5A for a lower recirculation edge height;
Figure 6 is a schematic cross-sectional view of a powder dosing system according to a second embodiment;
Figure 7 is a schematic cross-sectional view of a powder dosing system according to a third embodiment;
Figure 8A is a schematic cross-sectional view of a powder dosing system according to a further embodiment;
Figure 8B is a schematic view of section A-A' of the embodiment of Figure 8A;
Figure 9 is a schematic cross-sectional view of a dosing system having an adjustable recirculation edge height;
Figure 10 is a flow diagram illustrating a process sequence for adjusting the recirculation edge height of a powder dosing system;
Figure 11 illustrates communications of an edge height controller for a powder dosing system with other components of the apparatus for manufacturing a three-dimensional object from powder; and
Figure 12 is a schematic cross-sectional view of an apparatus for layer-by-layer formation of solid objects having a powder dosing system, a recirculation loop and a return loop.

In the figures, like elements are indicated by like reference numerals throughout.

### DETAILED DESCRIPTION

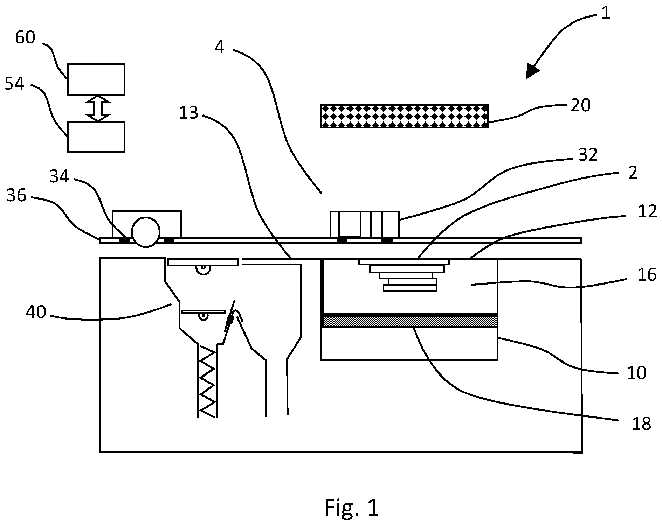

Embodiments of an improved powder dosing system and its use will now be described with respect to Figures 1-3 and Figures 5-12.

A powder dosing system is provided for an apparatus for manufacturing a three-dimensional object from powder, the powder dosing system comprising a rotating agitator arranged to agitate a supply of delivered powder by rotating over an agitation volume, a recirculation edge adjacent the region of agitation arranged to allow excess agitated powder to freely flow from the region of agitation over the recirculation edge and out of the dosing system, and a dosing blade arranged to deliver a portion of powder to a work surface comprising a build bed surface. The dosing blade is arranged to sweep through a swept volume, which is located, in a vertical sense, above the region of agitation and overlaps, in a vertical sense, the agitation volume, such that the dosing blade doses agitated powder to the work surface. By allowing the powder to freely flow over the recirculation edge and out of the dosing system, for example into an adjacent chamber, the level of powder in the dosing system is self-regulating irrespective of the amount of powder delivered by the delivery mechanism (for example an auger), as long as the delivery mechanism overdelivers powder into the dosing system and the powder is kept in a free-flowing state.

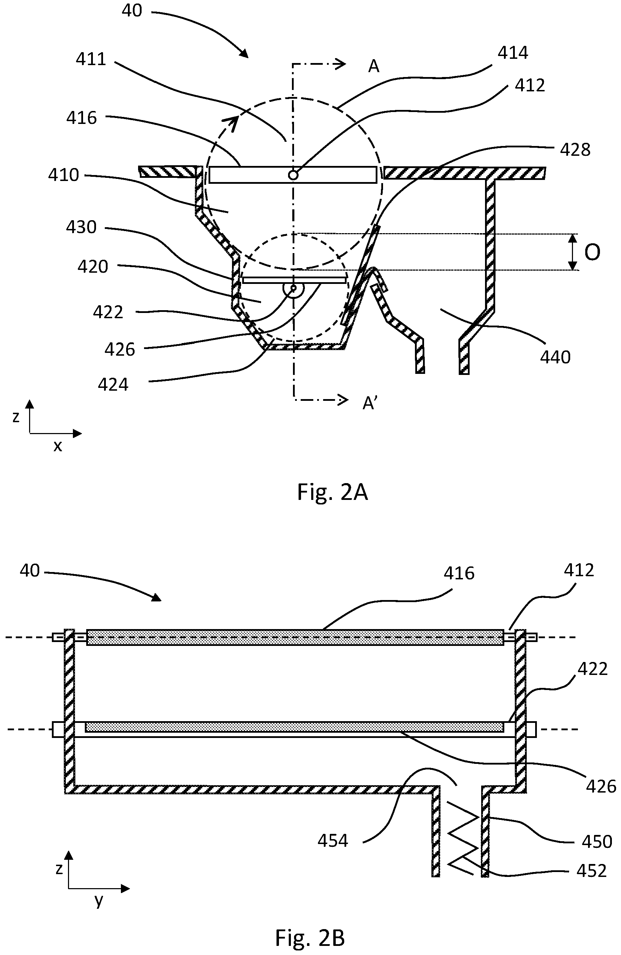

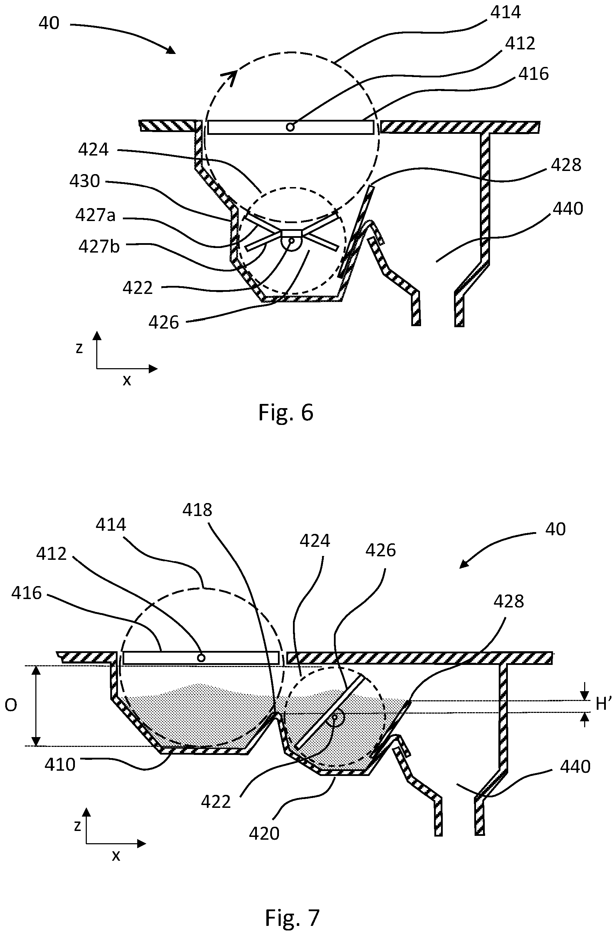

The expression "overlap in a vertical sense", as used herein, is intended to not only encompass configurations in which the agitation volume and the swept volume directly overlap, one above the other, so as to have a shared overlapping region (e.g. as shown in Figure 2A), but also to encompass configurations in which the agitation volume and the swept volume are side by side (i.e. do not have a shared overlapping region) but nevertheless still overlap by both passing into a common vertical region in a projection view along the y-direction. Such a projected overlap is indicated for example in Figure 7 by 'O'. Considered another way, the expression "overlap in a vertical sense" means that the top of the agitation volume is higher than the bottom of the swept volume, regardless of whether the agitation volume and the swept volume directly overlap, one above the other, or are side by side. Example embodiments illustrating this meaning will be described below.

Embodiments will now be described by way of example with respect to Figures 1 to 3 and Figures 5 to 7.

Figure 1 shows an apparatus 1 for layer-by-layer formation of three-dimensional objects by the consolidation of particulate matter, and having a powder dosing system. The apparatus 1 has a working space 4 in which a sled system comprising sleds 32 and 34, an overhead heater 20, and a build bed 16 are arranged. The build bed 16 has a build bed surface 12. The build bed surface 12 is comprised within a work surface 13, which is the surface onto which powder is dosed from the dosing chamber system. Within the work surface 13, successive layers of dosed powder are spread over the build bed surface 12 to form an object 2.

The build bed 16 and the formed object 2 are supported inside a build chamber 10, in which the build bed 16 is supported by a piston 18 which is movable in the vertical direction. The piston lowers the build bed 16 by a layer height each time a layer build is completed. Moveable across the build bed surface 12 are modules supporting powder spreading and processing equipment, in this case comprised within two carriages, or sleds. One sled is a printing sled 32 supporting one or more droplet deposition heads and a radiative lamp (e.g. an infrared lamp), and the other sled is a powder distribution sled 34 comprising a powder spreader, for example a roller. Each sled is moveable on a rail 36 across the build bed surface 12. Further shown is a powder dosing system 40, which doses powder to the work surface 13 so that it can be spread by the powder distribution sled 34 across the build bed surface 12. Once a layer of powder has been spread over the build bed surface 12 by the powder distribution sled 34, the printing sled 32 moves across the layer to deposit radiation absorbent material (RAM) in a carrier fluid, and then the radiative lamp (e.g. infrared lamp) mounted on the printing sled 32 is used to irradiate the powder so as to fuse the areas onto which RAM has been deposited. Next, the piston 18 lowers the build bed 16 by a layer thickness, and the process is repeated until the object is fully built.

The build process for forming an object of high quality requires control over the amount and the properties of the powder dosed by the powder dosing system 40, which will now be described in detail.

Figures 2A and 2B show the powder dosing system 40 having a powder chamber 430 comprising a dosing chamber 410 in communication, with respect to the flow of powder, with an agitator chamber 420. In other words, powder can pass from the agitator chamber 420 to the dosing chamber 410.

Figure 2A is a section view of the x-z section of the powder dosing system 40. It shows the dosing chamber 410 housing a dosing blade 416 and the agitator chamber 420 housing an agitator 426. Powder is delivered to the powder chamber 430 via a delivery tube 450 having a delivery mechanism, such as an auger screw 452. The auger screw is shown in a y-z section of the powder dosing system 40 in Figure 2B, illustrating section A-A' of Figure 2A. Figure 2B shows the auger screw arranged to deliver powder via an outlet 454 of the delivery tube 450 to the floor of the powder chamber 430 - in this case to the floor of the agitator chamber 420.

The dosing blade 416 extends either side of a dosing blade shaft 412. When the shaft 412 rotates about its axis, as indicated by the uppermost dashed line in Figure 2B, the dosing blade 416 sweeps a swept volume 414 indicated by a dashed circle in Figure 2A. The swept volume 414 is determined by the width of the dosing blade along a direction extending outwards from the shaft. In this case the volume is of a cylindrical shape determined by the extent, defining a radius of rotation, of the dosing blade from the central axis.

The dosing blade 416 shown in Figure 2A extends across the dosing chamber outlet 411 such that its outer major surface almost covers the dosing chamber outlet 411 when the blade is in the horizontal position (along the x-y plane). Alternatively, the dosing blade may only cover one half of the width of the outlet, by extending from the shaft to one side of the dosing chamber outlet 411. The dosing blade doses powder to the powder bed surface by rotating in the direction shown (clockwise towards the powder bed side). In this way, the powder distribution sled 34 passing across the dosing chamber outlet 411 begins spreading the powder once it has passed the outlet 411.

The agitator 426 located in the agitator chamber agitates the powder that is being delivered by the auger screw 452 from the delivery tube outlet 454. The function of the agitator is to keep the powder in a free-flowing state so that it spreads evenly along the length of the powder chamber (along the y-direction) and across the width of the powder chamber (along the x-direction); in this example this can be achieved purely by gravitational force. If the powder is not kept in a free-flowing state, an amount of powder may start to accumulate to form a mound on the surface of the powder above the delivery tube outlet, leading to a non-uniform powder level and uneven dosing by the dosing blade.

The delivery tube outlet 454 may be located in a different position at the bottom of the agitator chamber; for example it may be located in the centre of the agitator chamber. It may alternatively be located in a side wall of the powder chamber, for example at a point along the length of the agitator chamber, or possibly along the length of the dosing chamber.

In Figure 2A, the agitator 426 is a rotating element mounted on a shaft 422. When the shaft 422 rotates about the shaft axis, as indicated by the lower dashed line in Figure 2B, the agitator 426 sweeps an agitation volume 424. In Figures 2A and 2B, the dosing blade 424 and the agitator 426 are shown with their major surfaces in the horizontal (x-y plane) position, the major surfaces being parallel to one another.

### Overlap of swept volume and agitation volume

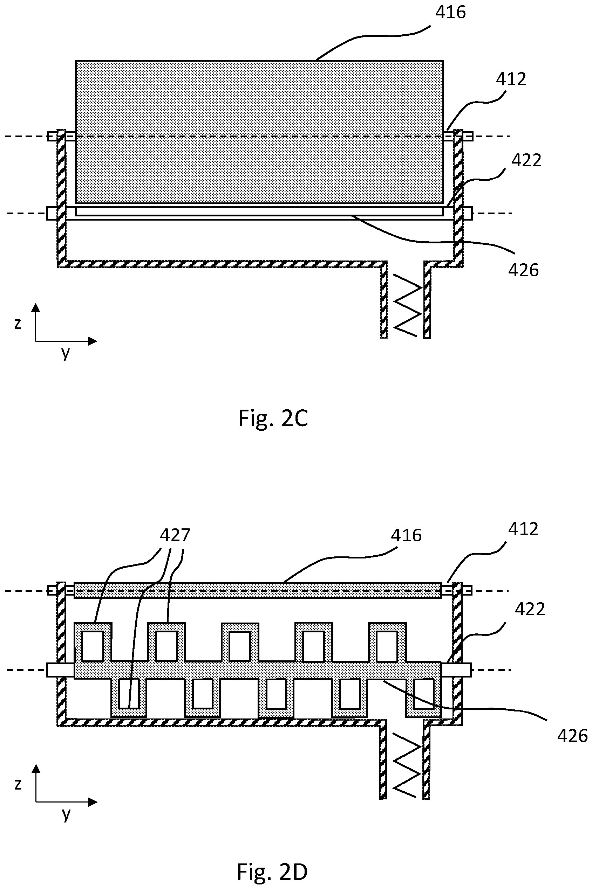

The relation of the agitator 426 to the dosing blade 416 during use is illustrated further in Figures 2C and 2D. Figure 2C shows the dosing blade 416 in the vertical position along the y-z plane, while the agitator 426 is in the horizontal position along the x-y plane. Note that the outer edge of the major surface of the dosing blade 416 passes close to the shaft of the agitator.

Figure 2D shows the dosing blade 416 in the horizontal position and the agitator 426 in the vertical position. The agitator in this example has open protrusions 427 extending away from a central spine fixed to the agitator shaft 422. Such a configuration of the agitator has been observed to spread, during rotation of the agitator, the powder along the y- and x- direction of powder chamber by gravitational forces while it is being delivered to the powder chamber via outlet 454. The configuration of the agitator shown is by no means essential, though, and alternative configurations are possible; for example the protrusions may not form closed loops, instead they may be filled-in (e.g. in the form of paddles), or they may simply take the form of rods or vanes extending in opposite directions from the central spine forming a comb-like structure on either side, or they may not describe square loops but have rounded shapes instead.

Regardless of the exact design of the agitator, it will be appreciated that with the dosing blade passing close by the agitator shaft during use, the rotation of the blade needs to be timed to avoid collision with the agitator. For example, the agitator may rotate 90° or close to 90° out of phase with the dosing blade, so that one of the two extends vertically only when the other is in the horizontal "base" position.

The close proximity of the dosing blade and the agitator in Figure 2 creates a vertical overlap `O' (Figure 2A) between the swept volume 414 and the agitation volume 424. In the specific embodiment of Figure 2, the powder dosing system is further arranged such that the swept volume 414 partially accommodates the agitation volume 424 to create, in addition to the vertical overlap, a physical overlap in the vertical direction.

Specifically, the agitator 426 rotates about the agitator shaft 422 which defines an axis of rotation for the agitator. In some implementations, the dosing blade is arranged to extend to within close proximity of the axis of rotation of the agitator when the dosing blade sweeps through the swept volume. In other words, the radius of agitation substantially overlaps the radius of the swept volume. In this respect, the rotation of the agitator is timed (i.e. synchronised) with respect to the rotation of the dosing blade. Such synchronisation could be by mechanical synchronisation, e.g. using gearing or one or more drive belts, or by means of electronic synchronisation.

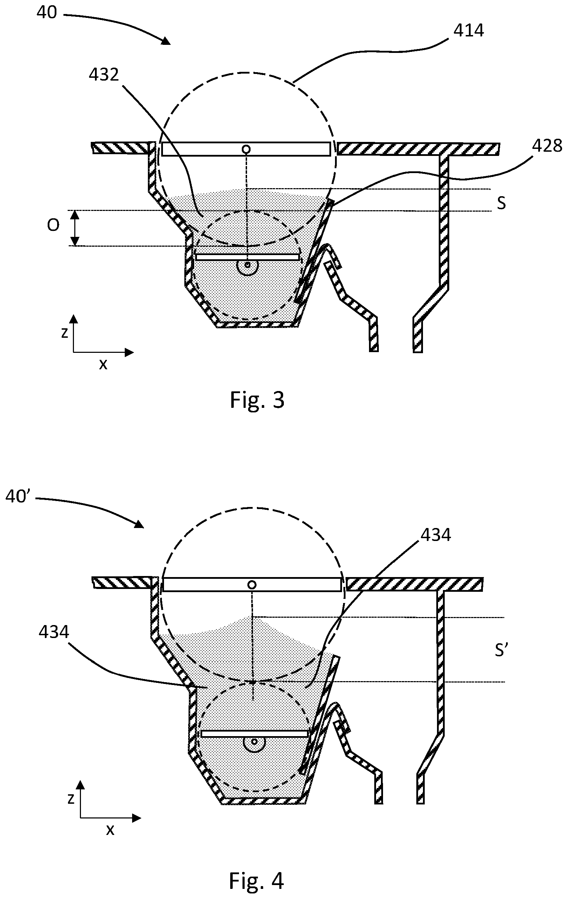

It will be seen from the further embodiment illustrated in Figure 7 that the vertical overlap `O' between the swept volume 414 and the agitation volume 424 need not comprise a physical overlap between the swept volume 414 and the agitation volume 424. Nevertheless, in either case, the vertical overlap 'O' helps to ensure that the powder above the agitator 426 remains in a free-flowing state within the swept volume 414. In addition, free-flowing powder is provided to the recirculation edge 428, the effect of which will be described in detail next, in relation to Figures 3 and 4.

Figure 3 shows the dosing system 40 of Figure 2 filled with powder 432. By comparison, Figure 4 shows a dosing system 40' in which the dosing blade is arranged further above the agitator such that there is no overlap, in the vertical sense, between the swept volume 414 and the agitation volume 424.

With this arrangement of the dosing system 40' there is no overlap between the swept volume 414 and the agitation volume 424, the height of a non-agitation region S' of the powder above the agitation volume 424 is higher than the corresponding height of a non-agitation volume S shown in Figure 3 for the dosing system 40. The effect of this is as follows. The further away the powder is from being agitated, and the larger the height of powder, the more likely the powder will settle, densify and form clumps. While the powder above the non-agitated height S' is located within the swept volume 414, it is possible that between dosing blade strokes the powder above the non-agitated height S' densifies, leading to clumps of powder being dosed to the work surface that cause undesirable uniformities of powder density or gaps in the subsequently spread layer.

In addition, significant 'dead space' regions 434 of powder are present, which are regions not swept by either the dosing blade 416 or the agitator 426. These regions remain stagnant, and over time the powder in these stagnant regions also settles and densifies. If resulting clumps of powder fall back into the agitator region, they may not be rendered fully flowable again by the agitator. This can lead to clumps of denser powder being delivered to the swept volume 414 and ultimately to the work surface, where the clumps again will cause non-uniform areas in the spread layer over the build bed surface 12, and therefore may cause a faulty object.

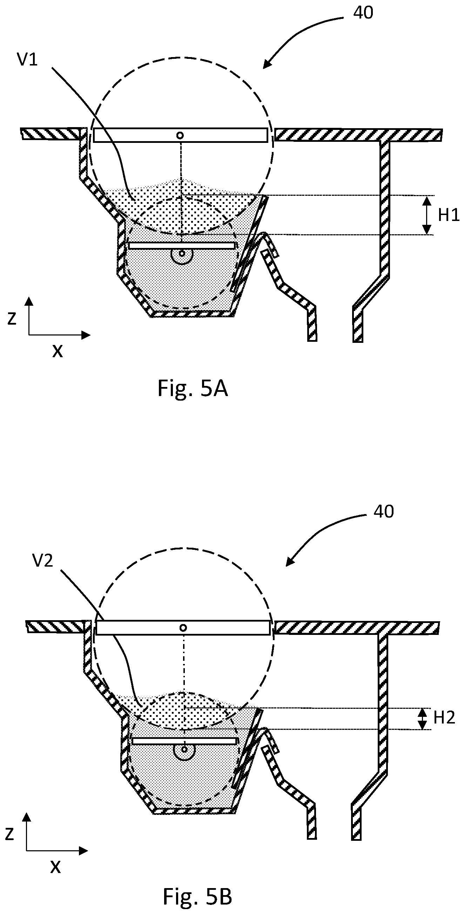

Further, the powder profile is affected by the degree of flowability of the powder, which may further compound the non-agitated height S'. This will be explained with respect to Figures 5A and 5B.

### Recirculation edge and impact of powder flowability

The arrangement of the powder dosing system 40 comprises a powder recirculation edge 428 adjacent the agitator over which powder may fall into a recirculation tube 440. In other words, the powder falling over the recirculation edge 428 leaves the dosing system 40. This avoids the powder chamber 430 becoming overfilled with powder while allowing the delivery mechanism (e.g. the auger screw) to deliver powder at periodic intervals, or continuously, without needing to be actively managed, for example by a powder sensor and feedback system that stops and starts the delivery mechanism in response to the powder level detected. Advantageously, the recirculation edge allows the dosing system to receive an oversupply of powder from the delivery mechanism so that the powder volume in the powder dosing system 40 self-regulates, since excess powder can freely flow over the recirculation edge to leave the dosing system and fall, for example, into an adjacent recirculation chamber. In addition, this means that the delivery mechanism may be run almost continuously and does not have to be stopped for significant periods of time, which can cause stagnation within the delivery mechanism and lead to powder agglomerates being delivered into the powder dosing system from the delivery mechanism. For example, where the delivery mechanism is an auger, the auger may only be stopped during a dosing stroke of the dosing blade 416 during which powder is dosed to the work surface.

The recirculation edge 428 therefore provides for passive regulation of the volume of powder in the powder chamber 430. Reliable regulation of this dosing system arrangement having a recirculation edge 428 may in turn be provided by ensuring that the powder remains in a free-flowing state, so that it can freely flow over the recirculation edge 428 to prevent overfilling the dosing chamber, and to maintain a consistent level of the swept powder volume 414. In this way, the dosing blade 416 may repeatedly dose a consistent volume of powder to the work surface and a repeatable uniform layer of powder may be spread over the build bed surface 12.

With reference to Figure 5A, the volume of powder in the swept volume 414 is indicated by the dotted area. It is located above the powder in the powder chamber that is not swept by the dosing blade. It can be seen, especially through comparison with Figure 5B showing a slightly lower recirculation edge height, how the height H of the recirculation edge 428 determines the swept volume 414. For a height H1 in Figure 5A, the swept volume is V1. During operation, the powder is delivered by the delivery mechanism to the powder chamber and agitated by the agitator to be in a free-flowing state. Once the agitated powder reaches the recirculation edge 428, volume V1 has been filled with powder and excess agitated powder falls over the recirculation edge 428.

On the other hand, in Figure 5B, the height H2 of the recirculation edge 428 is lower than H1, and the volume V2 of powder along the swept volume 414 is correspondingly lower than V1.

Note that the volume V further depends on the surface profile of the powder. Without agitation, the profile is determined by the avalanche angle of the powder. The avalanche angle is slightly higher than the angle of repose of a powder, which is the slope at which a specific powder naturally rests. Powder slippage occurs if the powder slope is made steeper; this 'critical' angle is the avalanche angle. Therefore, when powder falls over the recirculation edge 428, this is due in part to the avalanche angle. The avalanche angle depends on the size and roughness of the powder particles, for example. For a nylon PA12 powder, the avalanche angle may be around 34-38° depending on the temperature and on the powder handling history (such as age, number of recirculation cycles through the printer) of the powder. When the powder is however agitated and becomes freely flowing, the density of the powder also plays an important role. For reduced density, the avalanche angle reduces also, and for a free-flowing material the 'fluidised' avalanche angle is near zero. This has been observed near the recirculation edge 428 for the powder dosing system 40. Furthermore, it has been observed that the angle varies non-linearly with distance from the recirculation edge 428, so that above the shaft of the agitator in the vertical direction, the powder forms a small conical pile. It is assumed that this is due to a lower level of flowability of the powder, and slightly increased density, which affects the 'fluidised' avalanche angle. For the powder dosing system 40, the range of the degree of fluidisation with distance from the agitation volume is narrow, and the pile formed above the agitator shaft is small.

Meanwhile with regard to the powder dosing system 40' of Figure 4, the powder profile observed is not desirable since the non-agitation volume S' causes a higher, less fluidised avalanche angle compared to the powder dosing system 40. This causes the 'fluidised' angle of avalanche near the recirculation edge 428 to be higher, and a higher conical pile of steeper slope is formed above the agitator. In the powder dosing system 40' therefore, there exists a wide range of powder densities above the agitator, and this system is therefore less reliable than the powder dosing system 40. For example, for system 40' the vertical separation between the axes of the dosing blade and the agitator was around 50mm. By creating an overlap in the vertical sense, between the swept volume and the agitation volume, of 14mm, a significant improvement in powder flowability was observed and the dosing system 40 operated reliably, while the dosing system 40' without vertical overlap between the swept volume and the agitation volume did not ensure reliable operation.

Notably, the height of the recirculation edge 428 of the powder dosing system 40 is comparatively higher than that required for the powder dosing system 40' due to the high degree of followability that can be achieved near the recirculation edge, leading to a very low fluidised avalanche angle near the recirculation edge.

Note therefore that the vertical overlap between the swept volume 414 and agitation volume 424, in the vertical direction, in combination with a recirculation edge 428 that passively controls the volume of powder along the swept volume, synergistically provide a powder dosing system that may ensure the deposition of a repeatably uniform layer of powder in an apparatus for manufacturing a three-dimensional object from powder.

### Alternative agitators

While the agitator in the above embodiments has been described as a rotating device having protrusions extending in one plane, alternative embodiments, some of which are illustrated in Figures 6 and 7, provide for alternative agitator designs.

Figure 6 shows a rotating agitator 426 in which protrusions 427 may be arranged in more than on plane. The protrusions 427a may be angled with respect to the central axis or shaft 422, and a second set of protrusions 427b may be angled in the opposite sense with respect to the central axis. The maximum angle the protrusions may extend away at from the central axis is defined by the shape of the swept volume, the agitation volume and the overlap between the two, so that the dosing blade cannot collide with the protrusions when the agitator is in its "base" position. As can be seen, this allows at least a second group of protrusions to be added to the agitator, for example where a higher degree of agitation is required.

Alternative arrangements for sweeping the swept volume and the agitation volume may be envisaged; for example, and elliptical rotational motion may be possible to adopt.

### Separate agitator chamber

A further embodiment shown in Figure 7 provides for a powder chamber in which the dosing blade 416 cannot collide with the agitator 426, as in this embodiment, swept volume is arranged adjacent to the agitation volume 424, in a horizontal sense, such that the swept volume 414 excludes the agitation volume. In other words, the swept volume is located next to, or to one side of, the agitation volume.

The powder chamber comprises an agitator chamber 420 which is in communication, with respect to the flow of powder, with the dosing chamber 410 via a dosing chamber edge 418. The agitator 426 shown is a rotating agitator of similar design to that of Figure 3, and agitates the powder delivered to the agitator chamber over the agitation volume 424. Adjacent to the agitator on one side is the dosing chamber edge 418, and adjacent to the agitator on the opposite side is the recirculation edge 428. The dosing chamber edge 418 is located at a lower height, in the vertical direction, with respect to the height of the recirculation edge 428, so that agitated powder first falls over the dosing chamber edge 418 before it reaches a level high enough for excess agitated powder to fall over the recirculation edge 428.

Therefore, the swept volume 414 and the agitation volume 424 are each arranged adjacent to and at opposing sides of a dosing chamber edge 418, wherein the height of the dosing chamber edge is arranged, in a vertical sense, below the recirculation edge height.

The dosing blade rotation describes a swept volume 414 that determines, based on the powder profile in the dosing chamber, the volume of powder delivered by the dosing blade 416 to the work surface. As with the previous embodiments, the swept volume 414 may be controlled by the height of the recirculation edge 428.

Since, in the embodiment of Figure 7, the agitator chamber 420 does not accommodate any of the swept volume 414 of the dosing blade 416, and likewise the dosing chamber 410 does not accommodate any of the agitation volume 424, timing of operation of the rotation of the dosing blade 416 with respect to the agitator 426 is not necessary. Furthermore, the design of the agitator 426 is not limited by the movement of the dosing blade 416. For example, compared with Figure 2D, the agitator 426 may have additional protrusions 427 extending radially outward from the agitator shaft 422 that may occupy any part of the agitation volume. Such sets of protrusions may extend radially outwards from the shaft 422 every 90° into the agitation volume 424.

As with the previous embodiments, in Figure 7 the swept volume 414 is located, in a vertical sense, above the agitation volume 424 and overlaps, in a vertical sense, the agitation volume 424, such that the dosing blade 416 doses agitated powder to the work surface. For clarity, the overlap in the vertical sense is indicated by the range O in Figure 7.

In addition to the freedom of design of the agitator that this embodiment allows (potentially enabling a more compact design of the overall apparatus to be achieved), the head of the powder within each chamber is kept small, and therefore prevents the agitated powder from densifying.

### Reciprocating or vibrating agitator

According to a further embodiment, a powder dosing system 40 for an apparatus for manufacturing a three-dimensional object from powder comprises a reciprocating or vibrating agitator arranged to agitate a supply of delivered powder in a region of agitation. A dosing blade is arranged to dose a portion of powder to a work surface comprising a build bed surface, and is arranged to sweep through a swept volume. The swept volume is located, in a vertical sense, above and adjacent the reciprocating or vibrating agitator, such that the dosing blade doses agitated powder to the work surface. A recirculation edge adjacent the swept volume is arranged to allow excess agitated powder to freely flow from a region of agitation over the recirculation edge.

This provides for a design in which the rotation of the dosing blade does not have to be timed with respect to the agitator, since the agitator is not a rotating agitator. The region of agitation is the region over which, in the vertical sense, the powder remains in a free-flowing state such that excess agitated powder can fall freely over the recirculation edge and into the recirculation tube. The extent of this region depends on the powder properties and the specific dimensions of the powder chamber, the dosing blade design, and the type and mode of operation of the reciprocating or vibrating agitator.

The use of a reciprocating or vibrating agitator instead of a rotating agitator may be particularly suitable in compact systems where it is not possible to install a powder chamber having an agitation chamber of appreciable depth. Instead, by using a reciprocating or vibrating agitator, the powder chamber depth is primarily defined by the depth of the dosing chamber 430.

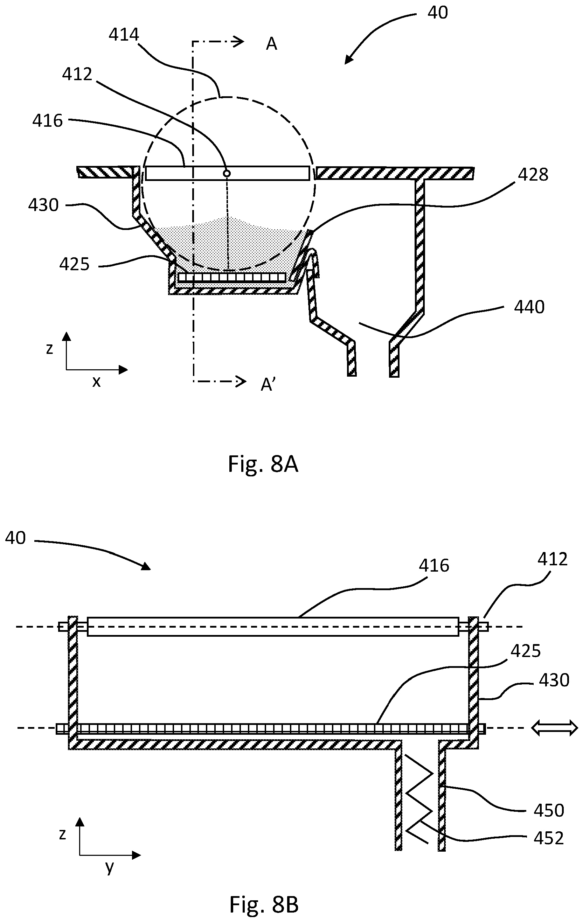

In some embodiments, the reciprocating or vibrating agitator may be a mesh agitator. In one implementation, Figure 8A is a view down the powder chamber along a dosing blade shaft 412, along the y-direction. A mesh agitator 425 is located above the floor of the powder chamber 430 and adjacent the swept volume 414 of the dosing blade 416. The mesh comprises openings that allow delivered powder to pass through the mesh from the powder chamber floor upwards along the vertical direction. A side view of the chamber along section A-A' is shown in Figure 8B. To agitate the powder delivered by the auger 452 in the delivery tube 450, the mesh is reciprocated laterally, along the y-direction, along an axis of reciprocation indicated by the lower dashed line as indicated by the arrow. Additionally, it may also be reciprocated laterally along the x-direction, or width, of the chamber. Alternatively, or additionally, the mesh may be arranged to vibrate, for example along the z-direction.

On other implementations of a reciprocating or vibrating agitator, the mesh may be in the form of parallel wires arranged along the width of the agitator, i.e. along the x-direction. A powder dosing system having a reciprocating or vibrating mesh agitator may be arranged such that powder is delivered to the dosing chamber from below the mesh agitator.

Alternatively, the reciprocating or vibrating agitator may be a predominantly solid plate in cases where powder is delivered to the powder chamber above the agitator. In the case of a reciprocating plate agitator, the plate may comprise parallel raised features along the width (x-direction) of the plate that improve the friction between the plate and the powder.

Similarly to the rotating agitator, the reciprocating or vibrating agitator distributes the powder along the length of the powder chamber and keeps it in a free-flowing state over the region of agitation. Due to the vertical overlap between the region of agitation and the swept volume 414, the recirculation edge maintains a consistent powder volume along the swept volume, since the excess powder overflows over the recirculation edge and out of the dosing system as long as the delivery mechanism overdelivers powder into the dosing system.

In some implementations, the tangent plane of the swept volume of the dosing blade is located in close proximity to the plane of the reciprocating or vibrating agitator. This means that the dosing blade removes substantially all of the agitated volume agitated above the plane surface of the agitator.

Therefore, the vertical overlap between the swept volume 414 and the region of agitation, in the vertical direction, in combination with the recirculation edge 428 that passively controls the volume of powder along the swept volume, synergistically provide a powder dosing system that may ensure the deposition of a repeatably uniform layer of powder in an apparatus for manufacturing a three-dimensional object from powder.

With respect to the above-described embodiments, regardless of the design of the agitator, the dosing blade may be arranged to sweep about a horizontal axis. The rotating agitator may be arranged to rotate about a horizontal axis.

Furthermore, the supply of delivered powder may be continuous or periodic.

As discussed above, the presence of the powder recirculation edge 428 adjacent to the agitator allows powder to flow out of the dosing system and thus prevents the powder chamber from overfilling while allowing the delivery mechanism (e.g. the auger screw) to deliver powder at periodic intervals, or continuously, without needing to be actively managed. The recirculation edge 428 therefore provides for passive regulation of the volume of powder in the powder chamber or the dosing system. In some cases, the powder may be delivered continuously with the auger screw rotating at full duty. In other cases, this may not be necessary, and the auger screw may only be activated periodically, for example only 50% of the time, such as 5 seconds on, 5 seconds off. This may prevent significant heat generation in the powder due to the auger screw. In other systems, the auger may only be stopped during a dosing stroke of the dosing blade to dose powder to the work surface. A nearcontinuous operation of the auger may reduce or prevent the occurrence of polymer stagnation in the auger, which can lead to powder agglomerates being supplied into the dosing system.

Additionally, the recirculation edge height may be located at a position that lies above the lowest point of the swept volume.

Moreover, as in the embodiment of Figure 2A, the recirculation edge 428 may extend adjacent and parallel to a tangent plane to the agitation volume 424.

### Adjustable recirculation edge

In accordance with the present invention, the height of the recirculation edge 428 is adjustable so as to vary the volume of the agitated powder that is dosed to the work surface.

This, for example, provides for an apparatus that can be tuned for the use of different powders. Since different powders are likely to have different flow characteristics, e.g. avalanche angles and 'fluidised' avalanche angles, the volume of the powder along the swept volume 414 may have to be adjusted so that a required volume of powder can be delivered to the work surface. Additionally, or instead, the volume of the powder being dosed to the work surface may need to be adjusted.

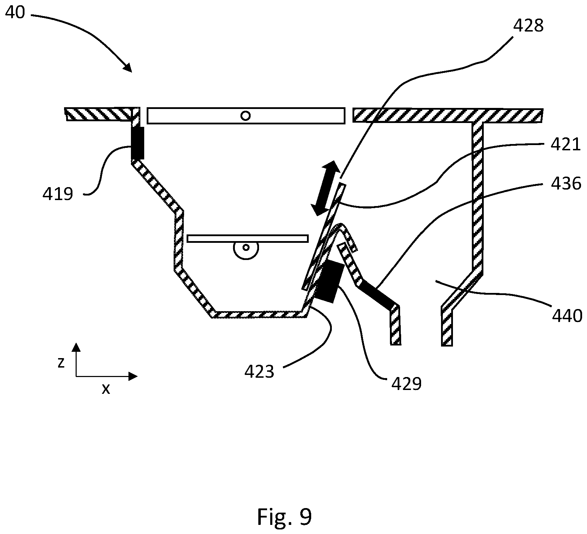

This may be achieved by making the height of the recirculation edge 428 adjustable. For example, the recirculation edge may be part of a slideable recirculation gate, which is a plate movable with respect to the powder chamber such that the height of the recirculation edge may be altered. This is shown in Figure 9, where the slideable recirculation gate 421 is arranged to be translated linearly along wall 423 of the agitation chamber, where wall 423 of the agitation chamber is the wall nearest the recirculation tube 440. In this way, the height of the recirculation edge 428 is adjustable vertically.

In some implementations of the above-described embodiments, the recirculation edge may extend adjacent and parallel to a tangent plane to the swept volume 414. This means that the plane of the recirculation gate 421, or the wall comprising the recirculation edge, is parallel to the tangent plane of the swept volume, and is located as close as possible to the tangent plane of the swept volume, thereby minimising the dead space between the swept volume 414 and the recirculation edge 428 (or the recirculation gate).

The direction of translation of the recirculation edge may extend along a parallel in close proximity to the tangent plane of the swept volume so as to avoid significant regions of dead space of powder.

The slideable recirculation gate 421 may be a metal plate attached to a linear translation motor 429 via a slot in the wall 423, while the motor 429 is attached to wall 423. Such an arrangement would give in-process control of the edge height 428. Alternative implementations of achieving electronic translation of the recirculation gate will be apparent to the skilled person.

Alternatively, a manually adjustable version of a slideable recirculation gate 421 may involve bolting the slideable recirculation gate 421 to the wall 423 of the agitation chamber. The slideable recirculation gate 421 in this case may have vertical slots through which the gate can be bolted to the wall 423. The bolts may be recessed by providing a chamfer on the slot edge so as to avoid the bolts protruding into the agitation chamber. A manually adjustable recirculation edge height may be suitable where the recirculation edge height is only required to be adjusted on build process set-up and not during processing.

### In-process control of recirculation edge height

Using a motor to electronically adjust the recirculation edge allows for in-process changes of the height of the recirculation edge 428, so as to adjust the dosed powder volume by allowing more powder to accumulate in the swept volume of the dosing blade.

The control over the recirculation edge height may be provided by an edge height controller which may for example be arranged to access conversion values of required powder volume (and/or layer thickness) to a suitable edge height for a specific type of powder. The required powder volume may be provided ad-hoc by the user, or it may be provided as part of a build process sequence for the layer by layer formation of the object. A build process controller may send process information to the edge height controller as necessary to cause the edge height controller to adjust the edge height at specific timings within the build process.

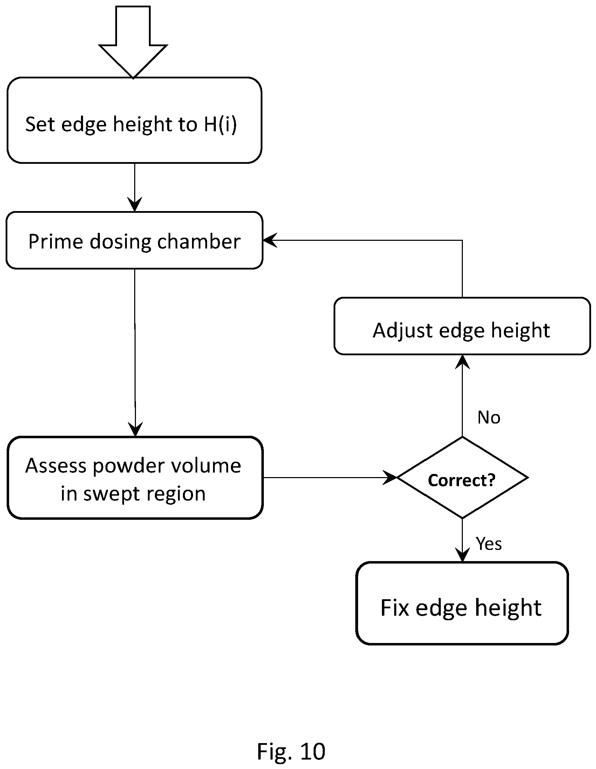

Figure 10 illustrates a process flow during priming of powder dosing system 40. Priming is required each time the recirculation edge 428 is adjusted, for example when selecting the correct edge height when the powder chamber is filled with new powder, or each time the recirculation edge height is adjusted during a build process.

As illustrated, a method for adjusting the recirculation edge height of the powder dosing system, according to the invention, comprises the steps of:
a) setting a recirculation edge height H;
b) priming the dosing chamber: delivering a supply of powder to the swept volume of the dosing blade, while agitating the delivered powder using the agitator, until excess agitated powder flows over the recirculation edge 416 and out of the dosing system 40;
c) assessing the volume of powder delivered to the swept volume; and
   i. if the assessed volume is not within tolerance of a required volume, adjusting the recirculation edge height and repeating from step (b); or;
   ii. if the assessed volume is within tolerance of a required volume, setting the height of the edge to the adjusted recirculation edge height.

At step (c)(ii), the priming process is finished. The build process can then start.

A similar method may be used to find corresponding values for edge height versus layer thickness, and optionally, the powder level of the swept volume. In this way, a look-up table or similar may be provided to the edge height controller to refer to during in-process adjustment of the edge height.

With respect to the step of adjusting the edge height, if the assessed volume of powder is too small, the recirculation edge height is increased, and if the assessed amount of powder is too high, the recirculation edge height is decreased. In practice, a tolerable margin may be defined such that the assessed volume is too small or too large only if it falls outside of the margin of the required volume.

Step (c) for assessing the volume of powder may for example comprise actuating the dosing blade to dose a dosed volume of the agitated powder to the work surface;
spreading the dosed powder across the build bed surface; and
assessing at least one of thickness and uniformity of the spread layer.

In some embodiments, the step of assessing the volume of powder delivered to the swept volume may comprise weighing the delivered volume. Additionally, or alternatively, the step of assessing the volume of powder delivered to the swept volume may comprise sensing the level of powder within the swept volume.

The step of adjusting the recirculation edge height comprises the step of actuating a translational mechanism arranged to adjust the recirculation edge height in response to one of weighing, sensing, or spreading the powder. The translational mechanism may be a linear motor.

Additionally, or alternatively, the powder dosing system of any of the above-described embodiments may comprise a powder level sensor for detecting the powder level within the swept volume, for example so as to monitor the powder level of the swept volume.

Such a powder level sensor 419 is shown in Figure 9, mounted to a wall of the dosing chamber. Since the agitator of the above-described embodiments keeps the powder in a free-flowing state, the powder profile inside the dosing chamber is of a reliable shape and a sensed level of the powder may reliably be converted into a swept volume. The sensed powder level may be used to monitor for problems within the dosing chamber, for example malfunction of the agitator or recirculation edge motor, and/or to assess whether the volume of powder within the swept volume requires adjustment. The powder level sensor may for example be used during adjustment of the recirculation edge.

Alternatively, or additionally, therefore, step (c) may comprise sensing the powder level, for example to assess whether the swept volume requires adjustment, to monitor the powder level during adjustment of the recirculation edge, and/or to create reference data of the powder properties relevant to the build process, for example a look up table of powder level reading against powder volume/layer thickness and edge height. The look up table may be used during the build process to adjust the recirculation edge height for a required layer thickness. Sensing of the powder level may also be done to test for malfunction once reference data of the powder properties has been created, for example where the set height does not result in a sensed powder level that matches closely with an expected powder level according to the reference data.

Additionally, or instead, the powder dosing system may comprise a recirculation edge sensor. With reference to Figure 9, a recirculation edge sensor 436 may be located in a wall of the recirculation tube 440. The recirculation edge sensor 436 may sense whether excess agitated powder is falling over the edge 428, and signal to the edge height controller that the dosing chamber has been filled. The edge height controller may next interrogate the powder level sensor 419 to test whether the powder level corresponds to the expected level. Where the powder level does not correspond to the expected level for the set edge height, the recirculation edge height controller may signal a malfunction to the build process controller.

In some implementations, the recirculation edge sensor may monitor the height of the recirculation edge, for example such that the actual height may be compared to an expected height by the recirculation edge height controller.

In further arrangements, the functions of the powder level sensor and the recirculation edge sensor may be fulfilled by the same sensor.

During a build process of a three-dimensional object, the recirculation edge height may be adjusted in response to an adjustment of the distributed layer thickness.

Accordingly, a method of forming a three-dimensional object from powder using a powder dosing system 40 is provided, wherein the recirculation edge height is adjustable by controlling a translational mechanism.

Several implementations of such a method will now be described. In some processes it may be necessary to alter the dosed powder volume during the build because a different thickness of distributed powder layer is required, or to compensate for the denser sintered area of the previously processed layer, as will be explained below.

At the start of a build process, buffer layers are distributed by the distribution sled without forming any object layers. The buffer layers are pre-warmed and help to ensure an even temperature distribution of the build bed surface. Once the buffer layers have been distributed, the first powder layer for the object build is distributed by the distribution sled and processed by operating the printing sled.

The overall buffer layer thickness is typically several microns thick by distributing 100-500 layers, each of the order of 100nm thick.

In some cases, some build layers or some buffer layers may require a different thickness than other build layers, or some build layers may require a different dosed powder volume than other layers to achieve the same layer thickness. The buffer layers may have a thickness higher than that of the object layers.

Alternatively, different object layer thicknesses may be required, such as during a temporary "sketch" mode where lower resolution in the z-direction (and therefore a thicker layer) may be acceptable to achieve faster build time.

The layer thickness may be changed by lowering the build bed by a distance equal to the required layer thickness. To ensure enough powder is dosed to the work surface, the required volume plus a small excess is dosed to the work surface. For each layer therefore, excess powder is present at the end of the pass of the powder distribution device, and the excess powder is either disposed of or recycled.

Rather than in response to changing layer thickness, the dosed volume may need to be adjusted during the build in response to the cross section sintered in the previous layer. Typically, the sintered areas are much denser than the unsintered areas, for example the density of unsintered powder volume may be around 0.4-0.6g/cm³ compared to the density of the sintered powder volume of 0.9-1.1g/cm³. The sintered areas in the processed powder layer therefore typically present sunken areas with respect to the unsintered powder surface, and present a volume that needs to be infilled with powder when a new layer of powder is distributed over the top. Depending on the cross section of sintered powder within the layer the additional volume of powder required to be dosed may be significant, e.g. 1-10% (possibly more).

While it is possible to set a dosed volume sufficient for all cross sections of the build, such that for some of the layers there will be an oversupply of dosed powder that will be lost at the end of the distribution step, in some cases it may be desirable to avoid wasting powder, and this may be achieved by allowing the amount of powder dosed to the work surface to be controlled during the build process, and in some cases layer-by-layer.

In some instances therefore, it is desirable to adjust the dosed powder volume in response to a different layer thickness or in response to the previous printed cross section causing a volume that requires to be filled within the previous layer. This may be achieved by increasing the recirculation edge height.

The recirculation edge height is adjusted for the required dosed powder volume, the powder chamber is filled by the powder delivery mechanism until agitated powder falls over the recirculation edge and out of the dosing system, and the required swept volume is achieved. Once the swept volume is dosed to the work surface from the dosing blade, it is distributed across the build bed surface by the roller.

In some implementations of the method therefore, two or more layers may be distributed on the build bed surface from powder dosed from the swept volume of the dosing blade such that a first layer is formed from a first swept volume and a second layer is formed from a second swept volume, wherein the swept volume is adjusted from a first volume to a second volume by controlling the translational mechanism.

The thickness of the first layer may be the same as the thickness of the second layer, and the second swept volume may be adjusted based on the area covered by the object in the first layer. This means that sintered, denser areas can be infilled with sufficient powder when the next layer is distributed, to ensure that the next layer is of the required thickness.

### Recirculation edge height controller

The operation of the dosing chamber system having an adjustable recirculation edge height that may be adjusted by a motorised translational mechanism may be controlled by a recirculation edge height controller system. The recirculation edge height controller system may be a distinct controller or it may be part of a build process controller.

A control system for adjusting the recirculation edge height of the powder dosing system of the above-described embodiments comprises, according to the invention, a recirculation edge height controller arranged to receive an input of a required powder level. The recirculation edge height controller is arranged to determine, for the required powder level, a corresponding recirculation edge height, and to control a translational mechanism for adjusting the recirculation edge height to the corresponding recirculation edge height.

The required powder level may be provided in the form of one of required layer thickness, required powder volume within the swept volume (required swept powder volume), or the actual required swept powder level within the dosing chamber, for example, or a request to increase/decrease the swept powder level by a percentile. In some embodiments, the edge height controller may receive the value for the required recirculation edge height. In other embodiments, the controller may be adapted to calculate, based on data of the sintered cross sections of a previous layer, the powder volume required to be dosed for the next layer. The powder level may be a qualitative or quantitative property - for example it may be a specific quantitative value, or it may be provided as a qualitative "low", "medium" or "high" level.

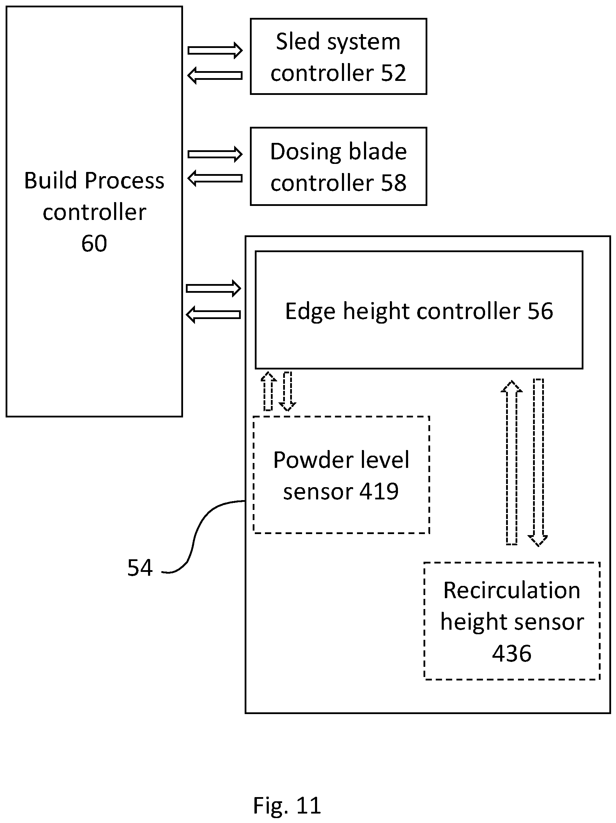

An embodiment of a recirculation edge height controller system is illustrated in Figure 11. A recirculation edge height control system 54 receives a command from a build process controller 60 to alter the height of the recirculation edge such that a required layer thickness can be achieved from the swept volume dosed to the work surface by the dosing blade. The edge height controller 56 is arranged to determine from the required thickness a corresponding edge height value from a closest thickness match. Next, the recirculation edge height controller controls the translational mechanism, such as a linear motor, of the recirculation gate, and the translational mechanism moves the recirculation edge to the required height.

Once the recirculation edge height has been adjusted to the corresponding recirculation edge height, the recirculation edge height controller 56 may send a signal to the build process controller 60 that the edge height has been adjusted.

The build process controller may then send a signal to the dosing blade controller 58 to actuate the dosing blade, whereupon the dosing blade doses the powder volume within the swept volume to the work surface, and the dosed volume of powder can be assessed. Assessment of the dosed powder volume may be done for example by the build process controller sending a signal to the sled system controller controlling the motion and functions of the sleds, whereupon the sled system controller causes the distribution sled to pass over the build bed surface to distribute the dosed powder over the build bed surface, and the thickness and uniformity of the distributed layer may be assessed.

The recirculation edge height controller may determine the required edge height from data, for example data in the form or a look up table or graph, correlating values of required layer thickness and/or required swept powder volume against corresponding edge height. This data may for example be provided by the method described for Figure 10.

The data may be in the form of a graph of layer thickness (or swept volume) versus edge height, extrapolating between measured values.

Additionally, the required thickness may be provided with a tolerance margin, such that the actual thickness to be achieved falls within an acceptable range of thicknesses.

The edge height controller system 54 may comprise one or more sensors. Specifically, the control system may comprise a powder level sensor arranged to detect a powder level of the swept volume. The edge height controller is arranged to receive the detected swept powder volume level, to determine a required swept powder volume level corresponding to the required powder level, and to determine whether the detected swept powder volume level is different from the required swept powder volume level. If the detected swept powder volume level is different from the required swept powder volume level, the edge height controller is further arranged to determine an adjustment to be made to the recirculation edge height to achieve the required swept powder volume level, and to control the translational mechanism to perform said adjustment.

Powder level sensor 419 may be located in the dosing chamber 410 so as to detect the swept powder volume level.

Alternatively, the controller may receive a required layer thickness instead of a required swept powder volume level, wherein the edge height controller is further arranged to determine a corresponding swept powder volume level in order to compare it to the detected swept powder volume level.

The amount of excess powder delivered in the overflow can also be detected, as a way of verifying that the apparatus is working normally and the dosing system is not being deprived of powder. Implementations of the powder dosing system may comprise a recirculation edge sensor arranged to detect excess agitated powder falling over the recirculation edge, and/or to detect the height of the recirculation edge.

During a priming process, the edge height controller may interrogate sensor 419 to assess the swept powder volume level in the dosing chamber, and compare it to the required swept powder volume level. In this case, the edge height controller determines from the required layer thickness the corresponding required swept powder volume level to compare against the detected swept powder volume level. If the required swept powder volume level is not the same as the detected swept powder volume level, within a margin of tolerance, the priming process of the powder chamber is not complete. Once the required swept powder volume level is the same as the detected swept powder volume level, within a margin of tolerance, the priming process of the powder chamber is complete and the edge height controller may send to the build process controller 60 a signal that the required swept powder volume level has been reached, and the build process controller can begin, or resume, a test or build procedure.

In some implementations, the control system may further comprise a recirculation edge sensor arranged to detect excess agitated powder falling over the recirculation edge, and/or to detect the height of the recirculation edge.

In the implementation of Figure 11, the recirculation edge sensor 436 is part of the edge height controller system.

During a priming process, the priming of the powder chamber may be complete once the edge height controller determines from the recirculation edge sensor 436 that powder is falling over the recirculation edge and out of the dosing system. The output of powder level sensor 419 may be used in addition to determine by the edge height controller 56 that the priming process is complete, or it may be used by the edge height controller 56 to test, once the recirculation edge sensor 436 senses powder falling over the edge, whether the detected swept powder volume level corresponds to an expected swept powder volume level based on data available to the edge height controller. If the detected swept powder volume level does not correspond to the swept powder volume level expected based on the recirculation edge height, despite the recirculation edge sensor signalling that priming is complete, the edge height controller may signal malfunction to the build process controller 60.

Alternatively, if a test procedure is used for determining a corresponding edge height corresponding to a required layer thickness, according to the steps illustrated in Figure 10, the edge height controller may adjust the recirculation edge height suitably and signal to the build process controller that the dosing chamber system is ready for the next priming step. The build process controller may then send a signal to the delivery mechanism to reinitiate the powder delivery. Alternatively, during the test procedure, the delivery mechanism may be operated continuously or periodically during adjustment of the recirculation edge height rather than being switched off.

The recirculation edge sensor 436 may further be used to detect the height of the recirculation edge, so that the edge height controller 56 may compare the set edge height value against the detected height value to assess whether a malfunction of the recirculation edge, for example of the translational mechanism, has occurred.

In some implementations of the control system, the edge height controller may be arranged to receive a required powder layer thickness in respect of the build bed surface;
determine a corresponding swept powder volume level based on the required powder layer thickness;
compare the detected swept powder volume level to the corresponding swept powder volume level; and
if the detected swept powder volume level is different from the corresponding swept powder volume level, to control the translational mechanism to adjust the recirculation edge height so as to cause the detected swept powder volume level to become substantially equal to the corresponding swept powder volume level.

In some implementations, the recirculation edge height controller is arranged to determine the corresponding recirculation edge height corresponding to the required swept powder volume level from stored data.

Alternatively, or additionally, the corresponding swept powder volume level may be determined based on the surface profile of the swept powder volume.

The data may be stored in the form of a look-up table or graph in memory comprised within the edge height controller, within the edge height controller system, or within the build process controller.

In the above examples it is clear that the swept powder volume is intended to be the same as, or closely corresponding to, the dosed powder volume. The swept powder volume becomes the dosed powder volume once it is delivered to the work surface. Depending on the design, it is possible that a small portion of the swept powder volume is not delivered to the work surface, i.e. the dosed volume is slightly smaller than the swept volume.

References to powder level are intended to refer to the height of the swept powder volume within the dosing chamber. The sensor therefore detects the height of the powder volume within the chamber.

When referring to a swept volume or to an agitation volume, these are intended to represent the three-dimensional spaces directly occupied by rotational devices such as the dosing blade and the rotational agitator during their operation. The volumes may be cylindrical, or they may take different shapes depending on the mode of rotation, eccentricity of axis, and the design of the protrusions of the agitator and the dosing blade.

The profile of the powder in the powder chamber may correspond to the profile shown in the Figures more strongly near and/or above the powder delivery outlet, and be less pronounced further away along the powder chamber from the powder delivery outlet. Nonetheless, even a reduced region that spans a portion of the length of the powder chamber but that is subject to powder settling and densifying will compromise the quality of the layer spread on the work surface, and therefore the quality of the object. While the specific powder profile is dependent on the type of powder, environmental conditions, and the design of the powder dosing system, the above embodiments apply similarly to different powder profiles.

It should be noted that, in a conventional dosing system in which the amount of powder on the dosing blade is regulated by allowing excess powder to flow down the dosing blade according to the avalanche angle and back into the dosing chamber, the powder volume in the dosing chamber is required to be adjusted by stop-starting the auger to regulate the amount of powder in the dosing system. If the auger runs a little lean, the powder volume in the dosing chamber recedes and the dosing blade starts to deliver a reduced amount of powder. This can eventually lead to non-uniform and/or incomplete distribution of one or more powder layers, which in turn leads to failure of the manufactured object.

Advantageously, though, the presence of the recirculation edge in the above embodiments and their various implementations allows the dosing systems 40 to receive a continuous oversupply of powder from the delivery mechanism so that the powder volume in the dosing system self-regulates, since excess powder can freely flow over the recirculation edge and out of the dosing system, to fall for example into an adjacent recirculation chamber. Thus, without any change in process parameters, in-process measuring and adjusting of powder level in the dosing system is not necessary to prevent powder starvation or overfilling of the dosing system, for example due to running the auger only intermittently or at an incorrect speed.

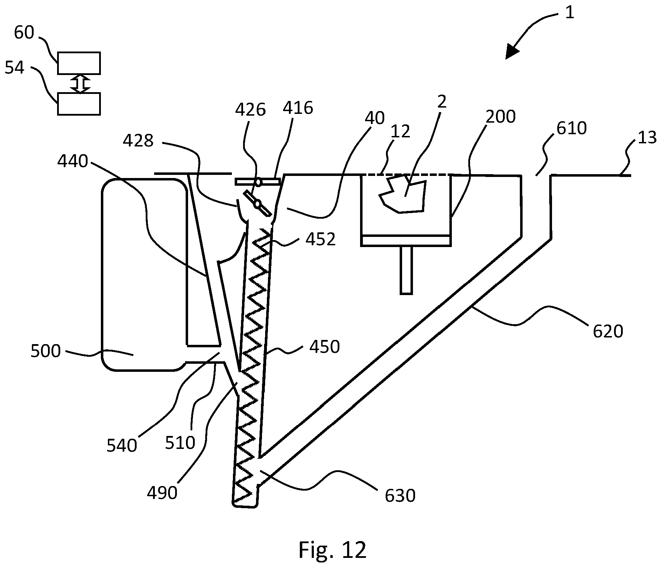

The self-regulating powder volume of the dosing system 40 may have additional effects depending on the powder handling system of the apparatus 1. This will now be described with reference to Figure 12, which shows an apparatus 1 having the dosing system 40 according to an embodiment, a recirculation loop and a return loop:
(a) In a system where the recirculation edge 428 is adjacent a recirculation tube 440, the powder falling into the recirculation tube 440 may be directly fed back into the auger tube 450 by connecting the recirculation tube at a recirculation tube entry location 490. The virgin powder enters the recirculation pipe 440 at a location 540 upstream from location 490 with respect from a virgin tank 500, via pipe 510. The recirculated powder thus enters the auger with priority over the virgin powder, keeping the recirculated powder in a free flowing state and continuously mixing it with virgin powder from the auger. Such as system reuses the recirculated powder, thus reducing waste powder and the costs of manufacturing the object.
(b) In an apparatus that additionally also returns excess powder at the end of a powder distribution stroke across the build bed surface 12 into a return slot 610 at the far side of the build bed surface, the returned powder may enter the delivery pipe 450 at a location 630 upstream from recirculation entry location 490, via pipe 620. The powder is thus prioritised to enter the delivery pipe 450 with prioritisation over powder from the recirculation pipe 440. By ensuring that the volume of powder in the recirculation loop is significantly higher than the volume supplied to the auger from the return loop, for example ten times higher, a high quality of powder uniformity can be ensured by mixing small amounts of return powder with large amounts of recirculated powder. The returned powder will have experienced a temperature cycle higher than the recirculated powder by being passed over the hot build bed surface 12. The recirculated powder will only have experienced moderate temperatures in the auger tube 450 and dosing system 40 (eg for PA11 powder this may be around 140°C), and thus it may be preferable to mix a significantly larger amount of recirculated high quality powder with a comparatively smaller amount of compromised quality return powder.

## Claims

1. A powder dosing system (40) for an apparatus for manufacturing a three-dimensional object from powder, the powder dosing system (40) comprising:
a powder chamber (430) comprising an agitator chamber (420) and a dosing chamber (410), wherein the agitator chamber (420) comprises a rotating agitator (426) arranged to agitate a supply of delivered powder by rotating through an agitation volume (424) determined by the extent of the rotating agitator from an axis of rotation (422) of the agitator (426); and
a dosing blade (416) arranged to dose a dosed volume of powder to a work surface (13) comprising a build bed surface (12), by sweeping through a swept volume (414) determined by the extent of the dosing blade (416) from an axis of rotation (412) of the dosing blade (416);
wherein the swept volume (414) is located, in a vertical sense, above the agitation volume (424) and overlaps, in a vertical sense, the agitation volume (424), such that the dosed volume of powder is agitated powder;
wherein the powder chamber (430) further comprises a recirculation edge (428) adjacent the agitator (426), and arranged to allow excess agitated powder to freely flow over the recirculation edge (428) and out of the powder dosing system (40); and
wherein the recirculation edge (428) has an adjustable recirculation edge height so as to vary the volume of the agitated powder that is dosed to the work surface (13).

2. The powder dosing system (40) according to claim 1, wherein the dosing blade (416) is arranged to extend to within close proximity of the axis of rotation (422) of the agitator (426) when the dosing blade (416) sweeps through the swept volume (414), such that a vertical overlap exists between the swept volume (414) and the agitation volume (424).

3. The powder dosing system (40) according to claim 1 or claim 2, wherein the agitator chamber (420) is arranged below the dosing chamber (410).

4. The powder dosing system (40) according to claim 1, wherein the agitator chamber (420) is arranged to one side of the dosing chamber (410) such that the swept volume (414) is arranged adjacent to the agitation volume (424), in a horizontal sense, such that the swept volume (414) excludes the agitation volume (424).

5. The powder dosing system (40) according to claim 4, wherein a dosing chamber edge (418) is arranged between the dosing chamber (410) and the agitator chamber (420), and adjacent and to one side of the agitator (426), and the recirculation edge (428) is arranged adjacent and to the opposite side of the agitator (426); and wherein the height of the dosing chamber edge (418) is arranged, in a vertical sense, below the recirculation edge height, so that agitated powder first falls over the dosing chamber edge (418) before it reaches a level high enough for excess agitated powder to flow over the recirculation edge (428).

6. The powder dosing system (40) according to claim 4, wherein the swept volume (414) and the agitation volume (424) are each arranged adjacent to and at opposing sides of a dosing chamber edge (418), wherein the dosing chamber edge (418) is arranged, in a vertical sense, below the recirculation edge height.

7. A powder dosing system (40) for an apparatus for manufacturing a three-dimensional object from powder, the powder dosing system (40) comprising:
a powder chamber (430) comprising a dosing chamber (410), and a reciprocating or vibrating agitator arranged to agitate a supply of delivered powder in a region of agitation so as to provide agitated powder; wherein the dosing chamber (410) comprises a dosing blade (416) having an axis of rotation (412) and arranged to sweep through a swept volume (414) determined by the extent of the dosing blade (416) from the axis of rotation (412), and to deliver a portion of powder to a work surface (13) comprising a build bed surface (12), wherein the swept volume (414) is located, in a vertical sense, above and adjacent the agitator, such that the portion of powder is agitated powder;
wherein the powder dosing system (40) further comprises a recirculation edge (428) adjacent to the swept volume (414), and arranged to allow excess agitated powder to freely flow from the region of agitation over the recirculation edge (428) and out of the powder dosing system (40); and
wherein the recirculation edge (428) has an adjustable recirculation edge height so as to vary the volume of the agitated powder that is dosed to the work surface (13).

8. The powder dosing system (40) according to claim 7, wherein the reciprocating or vibrating agitator is a mesh agitator (425).

9. The powder dosing system (40) according to claim 7 or claim 8, wherein the tangent plane of the swept volume (414) of the dosing blade (416) is located in close proximity to the plane of the reciprocating or vibrating agitator such that the dosing blade (416) removes substantially all of the agitated volume agitated above the plane of the agitator.

10. The powder dosing system (40) according to any one of claims 1 to 3 or according to any one of claims 7 to 9, wherein the recirculation edge (428) extends adjacent and parallel to a tangent plane to the swept volume (414).

11. The powder dosing system (40) according to any preceding claim, further comprising a powder level sensor (419) for detecting the powder level within the swept volume (414).

12. The powder dosing system (40) according to any preceding claim, further comprising a recirculation edge sensor (436) arranged to detect excess agitated powder falling over the recirculation edge (428), and/or to detect the recirculation edge height.

13. A method of adjusting the recirculation edge height of the powder dosing system (40) according to any preceding claim, the method comprising the steps of:
(a) setting the recirculation edge height;
(b) delivering a supply of powder to the swept volume (414) of the dosing blade (416), while agitating the delivered powder using the agitator, until excess agitated powder flows over the recirculation edge (428) and out of the powder dosing system (40);
(c) assessing the volume of powder delivered to the swept volume (414); and
(d) if the assessed volume of powder is not within tolerance of a required volume, adjusting the recirculation edge height, and repeating from step (b); or,
(e) if the assessed volume is within tolerance of a required volume, setting the recirculation edge height to the adjusted recirculation edge height.

14. A control system (54) for adjusting the recirculation edge height of the powder dosing system (40) according to any one of claims 1 to 12, the control system (54) comprising a recirculation edge height controller (56) arranged to receive a required powder level;
wherein the recirculation edge height controller (56) is arranged to determine, for the required powder level, a corresponding recirculation edge height, and to control a translational mechanism (429) for adjusting the recirculation edge height to the corresponding recirculation edge height.

## Patentansprüche

1. Pulverdosiersystem (40) für eine Vorrichtung zur Herstellung eines dreidimensionalen Objekts aus Pulver, wobei das Pulverdosiersystem (40) umfasst:
eine Pulverkammer (430), die eine Rührwerkskammer (420) und eine Dosierkammer (410) umfasst, wobei die Rührwerkskammer (420) ein rotierendes Rührwerk (426) umfasst, das so angeordnet ist, dass es einen Vorrat an zugeführtem Pulver mittels Rotation durch ein Rührvolumen (424) rührt, das sich aus der Erstreckung des rotierenden Rührwerks zu einer Rotationsachse (422) des Rührwerks (426) bestimmt; und
eine Dosierklinge (416), die so angeordnet ist, dass sie ein dosiertes Volumen des Pulvers auf eine Arbeitsfläche (13) dosiert, die eine Aufbaubettoberfläche (12) umfasst, indem sie durch ein überstrichenes Volumen (414) streicht, das sich aus der Erstreckung der Dosierklinge (416) von einer Rotationsachse (412) der Dosierklinge (416) bestimmt;
wobei sich das überstrichene Volumen (414) vertikal bemessen über dem Rührvolumen (424) angeordnet ist, und das Rührvolumen (424) vertikal bemessen überlappt, so dass das dosierte Volumen des Pulvers ein gerührtes Pulver ist;
wobei die Pulverkammer (430) ferner eine Rezirkulationskante (428) benachbart zu dem Rührwerk (426) umfasst und so angeordnet ist, dass überschüssiges gerührtes Pulver frei über die Rezirkulationskante (428) und aus dem Pulverdosiersystem (40) fließen kann; und
wobei die Rezirkulationskante (428) eine einstellbare Rezirkulationskantenhöhe aufweist, um das Volumen des gerührten Pulvers, das auf die Arbeitsfläche (13) dosiert wird, zu variieren.

2. Pulverdosiersystem (40) nach Anspruch 1, wobei der Dosierklinge (416) so angeordnet ist, dass sie sich bis in unmittelbare Nähe der Rotationsachse (422) des Rührwerks (426) erstreckt, wenn die Dosierklinge (416) das überstrichene Volumen (414) überstreicht, so dass eine vertikale Überlappung zwischen dem überstrichenen Volumen (414) und dem Rührvolumen (424) besteht.

3. Pulverdosiersystem (40) nach Anspruch 1 oder Anspruch 2, wobei die Rührwerkskammer (420) unterhalb der Dosierkammer (410) angeordnet ist.

4. Pulverdosiersystem (40) nach Anspruch 1, wobei die Rührwerkskammer (420) auf einer Seite der Dosierkammer (410) angeordnet ist, so dass das überstrichene Volumen (414) horizontal bemessen neben dem Rührvolumen (424) angeordnet ist, so dass das überstrichene Volumen (414) das Rührvolumen (424) ausschließt.

5. Pulverdosiersystem (40) nach Anspruch 4, wobei eine Dosierkammerkante (418) zwischen der Dosierkammer (410) und der Rührwerkskammer (420) und benachbart zu einer Seite des Rührwerks (426) angeordnet ist und die Rezirkulationskante (428) benachbart zu der gegenüberliegenden Seite des Rührwerks (426) angeordnet ist; und wobei die Höhe der Dosierkammerkante (418) vertikal bemessen unterhalb der Höhe der Rezirkulationskantenhöhe angeordnet ist, so dass gerührtes Pulver zuerst über die Dosierkammerkante (418) fällt, bevor es einen Pegel erreicht, der hoch genug ist, dass überschüssiges gerührtes Pulver über die Rezirkulationskante (428) fließen kann.

6. Pulverdosiersystem (40) nach Anspruch 4, wobei das überstrichene Volumen (414) und das Rührvolumen (424) jeweils benachbart zu und auf gegenüberliegenden Seiten einer Dosierkammerkante (418) angeordnet sind, wobei die Dosierkammerkante (418) in vertikaler Richtung unterhalb der Rezirkulationskantenhöhe angeordnet ist.

7. Pulverdosiersystem (40) für eine Vorrichtung zur Herstellung eines dreidimensionalen Objekts aus Pulver, wobei das Pulverdosiersystem (40) umfasst:
eine Pulverkammer (430), die eine Dosierkammer (410) und ein hin- und hergehendes oder vibrierendes Rührwerk umfasst, das so angeordnet ist, dass es einen Vorrat an zugeführtem Pulver in einem Rührbereich rührt, um gerührtes Pulver bereitzustellen; wobei die Dosierkammer (410) eine Dosierklinge (416) umfasst, die eine Rotationsachse (412) aufweist und so angeordnet ist, dass sie über ein überstrichenes Volumen (414) streicht, das sich aus der Erstreckung der Dosierklinge (416) von der Rotationsachse (412) bestimmt, und einen Teil des Pulvers an eine Arbeitsfläche (13) abgibt, die eine Aufbaubettoberfläche (12) umfasst, wobei das überstrichene Volumen (414) vertikal bemessen oberhalb und neben dem Rührwerk angeordnet ist, so dass der Teil des Pulvers gerührtes Pulver ist;
wobei das Pulverdosiersystem (40) ferner eine Rezirkulationskante (428) aufweist, die an das überstrichene Volumen (414) angrenzt und so angeordnet ist, dass überschüssiges gerührtes Pulver frei aus dem Bereich des Rührens über die Rezirkulationskante (428) und aus dem Pulverdosiersystem (40) heraus fließen kann; und
wobei die Rezirkulationskante (428) eine einstellbare Rezirkulationskantenhöhe aufweist, um das Volumen des gerührten Pulvers, das auf die Arbeitsfläche (13) dosiert wird, zu variieren.

8. Pulverdosiersystem (40) nach Anspruch 7, wobei das hin- und hergehende oder vibrierende Rührwerk ein Gitterrührwerk (425) ist.

9. Pulverdosiersystem (40) nach Anspruch 7 oder Anspruch 8, wobei die Tangentialebene des überstrichenen Volumens (414) der Dosierklinge (416) in unmittelbarer Nähe der Ebene des hin- und hergehenden oder vibrierenden Rührwerks liegt, so dass die Dosierklinge (416) im Wesentlichen das gesamte gerührte Volumen oberhalb der Ebene des Rührwerks abführt.

10. Pulverdosiersystem (40) nach einem der Ansprüche 1 bis 3 oder nach einem der Ansprüche 7 bis 9, **dadurch gekennzeichnet, dass** sich die Rezirkulationskante (428) benachbart und parallel zu einer Tangentialebene zu dem überstrichenen Volumen (414) erstreckt.

11. Pulverdosiersystem (40) nach einem der vorhergehenden Ansprüche, ferner umfassend einen Pulverpegelsensor (419) zum Erfassen des Pulverpegels innerhalb des überstrichenen Volumens (414).

12. Pulverdosiersystem (40) nach einem der vorhergehenden Ansprüche, ferner umfassend einen Rezirkulationskantensensor (436), der so angeordnet ist, dass er überschüssiges gerührtes Pulver, das über die Rezirkulationskante (428) fällt, erfasst und/oder die Höhe der Rezirkulationskante erfasst.

13. Verfahren zum Einstellen der Rezirkulationskantenhöhe des Pulverdosiersystems (40) nach einem der vorhergehenden Ansprüche, wobei das Verfahren die folgenden Schritte umfasst:
(a) Einstellen der Höhe der Rezirkulationskante;
(b) Zuführen eines Pulvervorrats in das überstrichene Volumen (414) der Dosierklinge (416), während das zugeführte Pulver unter Verwendung des Rührwerks gerührt wird, bis überschüssiges gerührtes Pulver über die Rezirkulationskante (428) und aus dem Pulverdosiersystem (40) fließt;
(c) Ermitteln des Volumens des Pulvers, das in das überstrichene Volumen (414) abgegeben wird; und
(d) wenn das ermittelte Pulvervolumen nicht innerhalb einer Toleranz eines erforderlichen Volumens liegt, Einstellen der Höhe der Rezirkulationskante und Wiederholung von Schritt b); oder,
(e) wenn das ermittelte Volumen innerhalb der Toleranz eines erforderlichen Volumens liegt, Einstellen der Höhe der Rezirkulationskante auf die eingestellte Rezirkulationskantenhöhe.

14. Steuersystem (54) zum Einstellen der Rezirkulationskantenhöhe des Pulverdosiersystems (40) nach einem der Ansprüche 1 bis 12, wobei das Steuersystem (54) einen Rezirkulationskantenhöhenregler (56) umfasst, der so angeordnet ist, dass er einen erforderlichen Pulverpegel aufnimmt;
wobei der Rezirkulationskantenhöhenregler (56) so angeordnet ist, dass er für den erforderlichen Pulverpegel eine entsprechende Rezirkulationskantenhöhe bestimmt, und dass er einen Translationsmechanismus (429) zum Einstellen der Rezirkulationskantenhöhe auf die entsprechende Rezirkulationskantenhöhe einstellt.

## Revendications

1. Système de dosage de poudre (40) pour un appareil de fabrication d'un objet tridimensionnel à partir de poudre, le système de dosage de poudre (40) comprenant :
une chambre à poudre (430) comprenant une chambre d'agitation (420) et une chambre de dosage (410), la chambre d'agitation (420) comprenant un agitateur rotatif (426) conçu pour agiter une quantité de poudre délivrée en tournant dans un volume d'agitation (424) déterminé par l'étendue de l'agitateur rotatif par rapport à un axe de rotation (422) de l'agitateur (426) ; et
une lame de dosage (416) conçue pour doser un volume dosé de poudre sur une surface de travail (13) comprenant une surface de lit de fabrication (12), en balayant un volume balayé (414) déterminé par l'étendue de la lame de dosage (416) par rapport à un axe de rotation (412) de la lame de dosage (416) ;
le volume balayé (414) étant situé, dans un sens vertical, au-dessus du volume d'agitation (424) et chevauchant, dans un sens vertical, le volume d'agitation (424) de telle sorte que le volume dosé de poudre soit de la poudre agitée ;
la chambre à poudre (430) comprenant en outre un bord de recirculation (428) adjacent à l'agitateur (426) et conçu pour permettre à un excès de poudre agitée de s'écouler librement sur le bord de recirculation (428) et hors du système de dosage de poudre (40) ; et
le bord de recirculation (428) ayant une hauteur de bord de recirculation réglable de manière à faire varier le volume de la poudre agitée qui est dosé sur la surface de travail (13).

2. Système de dosage de poudre (40) selon la revendication 1, dans lequel la lame de dosage (416) est conçue pour s'étendre à proximité immédiate de l'axe de rotation (422) de l'agitateur (426) lorsque la lame de dosage (416) balaie le volume balayé (414), de telle sorte qu'un chevauchement vertical existe entre le volume balayé (414) et le volume d'agitation (424).

3. Système de dosage de poudre (40) selon la revendication 1 ou 2, dans lequel la chambre d'agitation (420) est agencée au-dessous de la chambre de dosage (410).

4. Système de dosage de poudre (40) selon la revendication 1, dans lequel la chambre d'agitation (420) est agencée d'un côté de la chambre de dosage (410) de telle sorte que le volume balayé (414) soit agencé adjacent au volume d'agitation (424), dans un sens horizontal, de telle sorte que le volume balayé (414) exclue le volume d'agitation (424).

5. Système de dosage de poudre (40) selon la revendication 4, dans lequel un bord de chambre de dosage (418) est agencé entre la chambre de dosage (410) et la chambre d'agitation (420) et adjacent à un côté de l'agitateur (426), et le bord de recirculation (428) est agencé adjacent au côté opposé de l'agitateur (426) ; et dans lequel la hauteur du bord de chambre de dosage (418) est agencée, dans un sens vertical, au-dessous de la hauteur de bord de recirculation, de telle sorte que la poudre agitée tombe d'abord sur le bord de chambre de dosage (418) avant d'atteindre un niveau suffisamment élevé pour que l'excès de poudre agitée s'écoule sur le bord de recirculation (428).

6. Système de dosage de poudre (40) selon la revendication 4, dans lequel le volume balayé (414) et le volume d'agitation (424) sont chacun agencés adjacents à des côtés opposés d'un bord de chambre de dosage (418) et au niveau de ceux-ci, le bord de chambre de dosage (418) étant agencé, dans un sens vertical, au-dessous de la hauteur de bord de recirculation.

7. Système de dosage de poudre (40) pour un appareil de fabrication d'un objet tridimensionnel à partir de poudre, le système de dosage de poudre (40) comprenant :
une chambre à poudre (430) comprenant une chambre de dosage (410) et un agitateur va-et-vient ou vibrant conçu pour agiter une quantité de poudre délivrée dans une région d'agitation afin de fournir de la poudre agitée ; la chambre de dosage (410) comprenant une lame de dosage (416) ayant un axe de rotation (412) et conçue pour balayer un volume balayé (414) déterminé par l'étendue de la lame de dosage (416) par rapport à l'axe de rotation (412), et pour délivrer une portion de poudre sur une surface de travail (13) comprenant une surface de lit de fabrication (12), le volume balayé (414) étant situé, dans un sens vertical, au-dessus de l'agitateur et adjacent à celui-ci, de telle sorte que la portion de poudre soit de la poudre agitée ;
le système de dosage de poudre (40) comprenant en outre un bord de recirculation (428) adjacent au volume balayé (414) et conçu pour permettre à un excès de poudre agitée de s'écouler librement à partir de la région d'agitation sur le bord de recirculation (428) et hors du système de dosage de poudre (40) ; et
le bord de recirculation (428) ayant une hauteur de bord de recirculation réglable de manière à faire varier le volume de la poudre agitée qui est dosé sur la surface de travail (13).

8. Système de dosage de poudre (40) selon la revendication 7, dans lequel l'agitateur va-et-vient ou vibrant est un agitateur à tamis (425).

9. Système de dosage de poudre (40) selon la revendication 7 ou 8, dans lequel le plan tangent du volume balayé (414) de la lame de dosage (416) est situé à proximité immédiate du plan de l'agitateur va-et-vient ou vibrant, de telle sorte que la lame de dosage (416) élimine sensiblement la totalité du volume agité au-dessus du plan de l'agitateur.

10. Système de dosage de poudre (40) selon l'une quelconque des revendications 1 à 3 ou selon l'une quelconque des revendications 7 à 9, dans lequel le bord de recirculation (428) s'étend adjacent et parallèle à un plan tangent au volume balayé (414).

11. Système de dosage de poudre (40) selon l'une quelconque des revendications précédentes, comprenant en outre un capteur de niveau de poudre (419) pour détecter le niveau de poudre dans le volume balayé (414).

12. Système de dosage de poudre (40) selon l'une quelconque des revendications précédentes, comprenant en outre un capteur de bord de recirculation (436) conçu pour détecter l'excès de poudre agitée tombant sur le bord de recirculation (428), et/ou pour détecter la hauteur de bord de recirculation.

13. Procédé de réglage de la hauteur de bord de recirculation du système de dosage de poudre (40) selon l'une quelconque des revendications précédentes, le procédé comprenant les étapes consistant à :
(a) définir la hauteur de bord de recirculation ;
(b) délivrer une quantité de poudre dans le volume balayé (414) de la lame de dosage (416), tout en agitant la poudre délivrée au moyen de l'agitateur, jusqu'à ce que l'excès de poudre agitée s'écoule sur le bord de recirculation (428) et hors du système de dosage de poudre (40) ;
(c) évaluer le volume de poudre délivré dans le volume balayé (414) ; et
(d) si le volume de poudre évalué ne se situe pas dans la tolérance d'un volume requis, régler la hauteur de bord de recirculation et répéter le procédé à partir de l'étape (b) ; ou
(e) si le volume évalué se situe dans la tolérance d'un volume requis, définir la hauteur de bord de recirculation à la hauteur réglée de bord de recirculation.

14. Système de commande (54) pour régler la hauteur de bord de recirculation du système de dosage de poudre (40) selon l'une quelconque des revendications 1 à 12, le système de commande (54) comprenant un dispositif de commande de hauteur de bord de recirculation (56) conçu pour recevoir un niveau de poudre requis ;
le dispositif de commande de hauteur de bord de recirculation (56) étant conçu pour déterminer, pour le niveau de poudre requis, une hauteur de bord de recirculation correspondante, et pour commander un mécanisme de translation (429) afin de régler la hauteur de bord de recirculation à la hauteur de bord de recirculation correspondante.
